Europäisches Patentamt

European Patent Office

Office européen des brevets

(19)

(11) **EP 1 612 541 A1**

(12) **EUROPEAN PATENT APPLICATION**
published in accordance with Art. 158(3) EPC

(43) Date of publication:
**04.01.2006 Bulletin 2006/01**

(51) Int Cl.:
***G01N 21/64*** (1980.01)

(21) Application number: **04724776.2**

(22) Date of filing: **31.03.2004**

(86) International application number:
**PCT/JP2004/004630**

(87) International publication number:
**WO 2004/090517 (21.10.2004 Gazette 2004/43)**

(84) Designated Contracting States:
**AT BE BG CH CY CZ DE DK EE ES FI FR GB GR HU IE IT LI LU MC NL PL PT RO SE SI SK TR**
Designated Extension States:
**AL LT LV MK**

(30) Priority: **04.04.2003 JP 2003101609**

(71) Applicant: **National Institute of Advanced Industrial Science and Technology Tokyo 100-8921 (JP)**

(72) Inventors:
• **Suzuki, H.,**
  **National Inst. of Adv Ind. Sci & Tech**
  **Tsukuba-shi,**
  **Ibaraki (JP)**
• **Miyamoto, N.,**
  **National Inst of Adv Ind Sci & Tech**
  **Tsukuba-shi,**
  **Ibaraki (JP)**
• **Takemura, T.,**
  **National Inst of Adv Ind Sci & Tech**
  **Tsukuba-shi,**
  **Ibaraki (JP)**
• **Nishida, D.,**
  **National Inst. of Adv Ind Sci & Tech**
  **Tsukuba-shi,**
  **Ibaraki (JP)**

(74) Representative: **Denison, Christopher Marcus et al Mewburn Ellis LLP York House 23 Kingsway London WC2B 6HP (GB)**

(54) **QUANTITATIVE REAGENT, METHOD AND EQUIPMENT OF SUBSTANCE UTILIZING FLUORESCENCE LIFETIME**

(57)    A method of detecting a fluorescent molecule in a test sample, the following steps: (a) a step of measuring in a time-dependent manner individual fluorescence intensities of a plurality of species of fluorescent molecules each having an inherent fluorescence lifetime; and (b) a step of comparing the measured fluorescence intensities.

Fig. 1

EP 1 612 541 A1

Printed by Jouve, 75001 PARIS (FR)

**Description**

TECHNICAL FIELD

The present invention relates to a reagent, method and apparatus for quantitatively determining a specific fluorescent molecule in a sample, as well as a method for analyzing the same.

BACKGROUND ART

Measurement of the concentration or mixing ratio of a fluorescently labeled substance in a sample has been carried out mainly by measuring the fluorescence intensity of the relevant fluorescent molecule in recent years. Briefly, it is possible to quantitatively determine a fluorescent molecule of unknown concentration or mixing ratio in a test sample by adding thereto a fluorescent molecule of known concentration (hereinafter called "reference fluorescent molecule") and comparing the fluorescence intensities of the fluorescent molecule to be detected and the reference fluorescent molecule. Application of such a method utilizing fluorescence intensities makes it possible to determine the expression level of a target gene or judge the type of single nucleotide polymorphism (SNP) by labeling the target molecule or probes with fluorescent molecules and comparing the fluorescence intensities of these molecules. Thus, the above method is industrially applied as DNA microarray method, TaqMan PCR method or Invader method and is now used widely. For example, Japanese Unexamined Patent Publication (PCT) No. Hei 8-510562 discloses a method in which the amount of PCR amplified nucleic acid is monitored by comparing the fluorescence intensities of two species of fluorescent molecules.
On the other hand, fluorescence lifetimes inherent to fluorescent molecules have not been utilized much because they were considered to be less affected by environments surrounding fluorescent molecules or the degree of chemical reactions. However, recently, fluorescence lifetimes have become positively used in the field of biotechnology because laser or laser diode with high output in the visible light region has been developed and measuring accuracy has been improved as a result of accelerated processing speed in electronic circuits. For example, Japanese Unexamined Patent Publication No. Hei 6-66802 discloses an invention of quantitatively determining the reaction product of an immune reaction, utilizing the fact that the transfer of photoluminescence energy is reflected on apparent fluorescence lifetimes. Further, Japanese Unexamined Patent Publication (PCT) No. 2002-542453 discloses "Method of Fluorescence Analysis on Biological Systems"; specifically, it describes a method of monitoring the internal growth of acceptor utilizing changes in fluorescence modulation lifetime and phase lifetime caused by fluorescence resonance energy transfer between donor and acceptor.

DISCLOSURE OF THE INVENTION

Quantitative determination or identification of a test sample (in particular, nucleic acid) now commonly practiced is carried out by labeling the test sample amplified by such as PCR method, LAMP method of ICAN method with a fluorescent molecule and then detecting the fluorescence intensity of the molecule. However, amplification or identification of test samples requires long time of labor and expensive reagents. Therefore, a simple, easy and non-expensive detection method is demanded.
The present invention aims at providing a method of detecting a fluorescent molecule, a reagent for detecting the same; an apparatus for quantitatively determining a fluorescent molecule, and a method of analyzing a fluorescent molecule.
As a result of intensive and extensive researches toward the solution of the above-described problems, the present inventors have paid attention to fluorescence lifetimes of fluorescent molecules and found that it is possible to detect fluorescent molecules simply and with low cost by measuring the decay of their fluorescence intensities in a time-dependent manner. Thus, the present invention has been achieved.
The present invention relates to the following.

(1) A method of detecting a fluorescent molecule in a test sample, comprising the following steps:

(a) a step of measuring in a time-dependent manner individual fluorescence intensities of a plurality of species of fluorescent molecules each having an inherent fluorescence lifetime; and
(b) a step of comparing the measured fluorescence intensities.

(2) A method of detecting a substance to be measured in a test sample, comprising the following steps:

(a) a step of labeling the substance to be measured with a plurality of species of fluorescent molecules each having an inherent fluorescence lifetime;
(b) a step of measuring in a time-dependent manner individual fluorescence intensities of the fluorescent molecules labeling the substance; and
(c) a step of comparing the measured fluorescence intensities.

(3) A method of judging the type of a substance to be measured in a test sample, comprising the following steps:

(a) a step of labeling the substance to be measured with a plurality of species of fluorescent molecules each having an inherent fluorescence lifetime;
(b) a step of measuring in a time-dependent manner individual fluorescence intensities of the fluorescent molecules labeling the substance;
(c) a step of comparing the measured fluorescence intensities; and
(d) a step of judging the types of the substances to be measured using the intensity ratios obtained by the comparison.

(4) In the methods described in (1) to (3) above, the plurality of species of fluorescent molecules may be, for example, fluorescent molecules belonging to individual groups of different three or more groups selected from the group consisting of a group having an inherent fluorescence lifetime of 0.01 ns or more and less than 1.0 ns; a group having an inherent fluorescence lifetime of 1.0 ns or more and less than 2.0 ns; a group having an inherent fluorescence lifetime of 2.0 ns or more and less than 3.0 ns; a group having an inherent fluorescence lifetime of 3.0 ns or more and less than 4.0 ns; a group having an inherent fluorescence lifetime of 4.0 ns or more and less than 5.0 ns; a group having an inherent fluorescence lifetime of 5.0 ns or more and less than 6.0 ns; and a group having an inherent fluorescence lifetime of 6.0 ns or more and less than 7.0 ns. The fluorescence lifetimes of the fluorescent molecules used are different from each other by 1.0 ns or more or by a factor of 1.1 or more. Preferably, three or more species of fluorescent molecules are used. The fluorescence lifetimes of these fluorescent molecules are, for example, 30 ns or less. At least one species of the fluorescent molecules or at least one species of the substances to be measured may have a known concentration. Specific examples of substances to be measured include probes or targets (e.g., nucleic acid).

(5) A method of analyzing a fluorescent molecule in a test sample, comprising the following steps:

(a) a step of measuring in a time-dependent manner individual fluorescence intensities of a plurality of species of fluorescent molecules each having an inherent fluorescence lifetime and preparing a fluorescence lifetime function represented by the following formula I:

$$\mathrm{f(t)} = \sum_{i=1}^{k} A_i \exp(-t/\tau_i) \tag{I}$$

where $A_i$ is a coefficient; $t$ is time; and $\tau_i$ is fluorescence lifetime;
and
(b) a step of calculating fluorescence intensities using the function.

(6) A method of analyzing a substance to be measured in a test sample, comprising the following steps:

(a) a step of labeling the substance to be measured with a plurality of species of fluorescent molecules each having an inherent fluorescence lifetime;
(b) a step of measuring in a time-dependent manner fluorescence intensities of the fluorescent molecules labeling the substance and preparing a fluorescence lifetime function represented by the following formula I:

$$f(t) = \sum_{i=1}^{k} A_i \exp(-t / \tau_i)$$

(I)

where Ai is a coefficient; t is time; and τi is fluorescence lifetime;
and
(c) a step of calculating fluorescence intensities using the function.

In the methods described in (5) and (6), fluorescence intensities are obtained by calculating the product of coefficient Ai and fluorescence lifetime τi.

(7) A method of judging the type of a gene, comprising the following steps:

(a) a step of labeling the gene in a test sample with a plurality of species of fluorescent molecules each having an inherent fluorescence lifetime;
(b) a step of measuring in a time-dependent manner fluorescence intensities of the fluorescent molecules labeling the substance and preparing a fluorescence lifetime function represented by the following formula I:

$$f(t) = \sum_{i=1}^{k} A_i \exp(-t / \tau_i)$$

(I)

where Ai is a coefficient; t is time; and τi is fluorescence lifetime;
(c) a step of calculating fluorescence intensities using the function to thereby detect the fluorescence intensities of the fluorescent molecules; and
(d) a step of judging the type of the gene using the fluorescence intensities as indicators.

In this method, fluorescence intensities are obtained by calculating the product of coefficient Ai and fluorescence lifetime τi.
In the above-described analysis method and judging method, it is preferable to use at least one species of fluorescent molecule having a known fluorescence lifetime.
(8) A reagent or kit for detecting a substance to be measured, comprising a plurality of species of fluorescent molecules each having an inherent fluorescence lifetime.
(9) An apparatus for detecting a fluorescent molecule in a test sample, comprising the following means:

(a) means for measuring in a time-dependent manner individual fluorescence intensities of a plurality of species of fluorescent molecules each having an inherent fluorescence lifetime; and
(b) means for comparing the measured fluorescence intensities.

(10) An apparatus for quantitatively determining a substance to be measured in a test sample, comprising the following means:

(a) means for labeling the substance to be measured with a plurality of species of fluorescent molecules each having an inherent fluorescence lifetime;
(b) means for measuring in a time-dependent manner individual fluorescence intensities of the fluorescent molecules labeling the substance; and
(c) means for comparing the measured fluorescence intensities.

BRIEF DESCRIPTION OF THE DRAWINGS

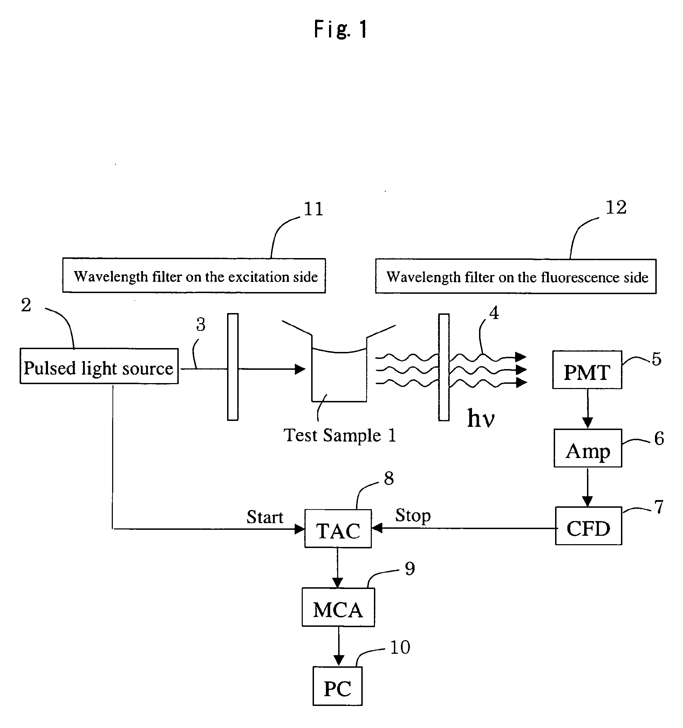

Fig. 1 shows the measuring principle of single photon counting and the measuring apparatus used in the present invention.
Figure legend:
1. test sample; 2. pulsed light source; 3. pulsed light; 4. fluorescence; 5. photomultiplier tube; 6. amplifier; 7. constant fraction discriminator; 8. time to amplitude converter; 9. multi-channel analyzer; 10. personal computer; 11. wavelength filter on the excitation side; 12. wavelength filter on the fluorescence side.
Fig. 2 shows spectra for explaining relations between two species of fluorescent molecules used in the present invention. F1ab and F1em represent the normalized absorption spectrum and fluorescence spectrum of fluorescent molecule F1, respectively. F2ab and F2em represent the normalized absorption spectrum and fluorescence spectrum of fluorescent molecule F2, respectively.
Fig. 3 is a schematic diagram showing relations between wavelength and fluorescence intensity.
Fig. 4 is a schematic diagram in which fluorescence intensity is plotted along the time axis.
Fig. 5 is a diagram showing fluorescence decay curves reflecting relations between fluorescence intensity and time.
Fig. 6 shows typical examples of decay curves of fluorescence derived from fluorescent molecules used in the present invention. Panel (a) corresponds to ID3 in Table 1 and panel (b) corresponds to ID6 in Table 1.
Fig. 7 shows fluorescence decay curves obtainable when the present invention is applied to SNP typing.
Fig. 8 is a graph showing that fluorescence intensity ratio obtained from fluorescence decay curves of fluorescence lifetimes changes linearly.
Fig. 9 shows fluorescence decay curves in sample C.
Fig. 10 shows fluorescence spectra of the four species of fluorescent molecules used in Example 4.
Fig. 11 shows the fluorescence spectrum obtained when sample C was excited.
Fig. 12 shows fluorescence decay curves in sample E.
Fig. 13 shows fluorescence spectra of the five species of fluorescent molecules used in Example 5.
Fig. 14 shows the fluorescence spectrum obtained when sample E was excited.

BEST MODES FOR CARRYING OUT THE INVENTION

Hereinbelow, the present invention will be described more specifically.

The present inventors have paid attention to the fact that the intensity of fluorescence emitted from a fluorescent molecule decays with the passage of time, and attempted to measure such decay of fluorescence intensity in a time-dependent manner. Then, the inventors have measured decay curves of fluorescence intensities of a test sample containing fluorescent molecules with different fluorescence lifetimes (i.e., time-dependency of the intensity of fluorescence emitted from the sample) by the technique of single photon counting ("Fluorescence Measurement", K. Kinoshita & H. Mihashi (eds.), Center for Academic Publications Japan).

In the present invention, the term "fluorescence lifetime" means the time in which the fluorescence intensity 10 immediately after the excitation pulse decays to 1/e (where e represents the base of a natural logarithm). Fluorescence lifetime is a value which a fluorescent molecule inherently has. For example, the fluorescence lifetime of 5-carboxynaphtofluoresceine is 6.05 nanoseconds (nsec) and that of fluoresceine is 4.04 nsec.

Single photon counting is a method in which photon (the minimum unit of light) is detected one by one. Thus, it is the most sensitive method among all photo-detection methods and is suitable for measuring the fluorescence lifetime of a trace amount of sample stably without depending on concentration, compared to the measurement of fluorescence intensity or absorption used commonly. For example, as shown in Fig. 1, a test sample 1 placed in a cell, tube, microplate, etc. (the substance to be measured is contained in this test sample 1) is irradiated with pulsed light 3 from a pulsed light source 2. Then, fluorescence 4 emitted from the test sample 1 is detected by a photomultiplier tube (PMT) 5. The wavelength of the light source 2 and the wavelength of light detected in the photomultiplier tube 5 are selected by a filter or spectroscope. Signal from the light source 2 (start signal) and signals from the photomultiplier tube 5 (stop signal) are input into a time-to-amplitude converter (TAC) 8 through an amplifier 6 and a constant fraction discriminator (CFD) 7. Then, depending on the timing of detection in the photomultiplier tube 5, output signals from TAC 8 vary. By taking these output signals into a multi-channel analyzer (MCA) 9, it is possible to measure fluorescence lifetime. The output signals are stored in the hard disc, etc. of a personal computer (PC) 10.

In the present invention, a method will be explained in which a plurality of species (specifically, two species) of fluorescent molecules with different inherent fluorescence lifetimes, i.e. F1 (with fluorescence lifetime τ1) and F2 (with fluorescence lifetime τ2), are used to measure the concentration of F2.

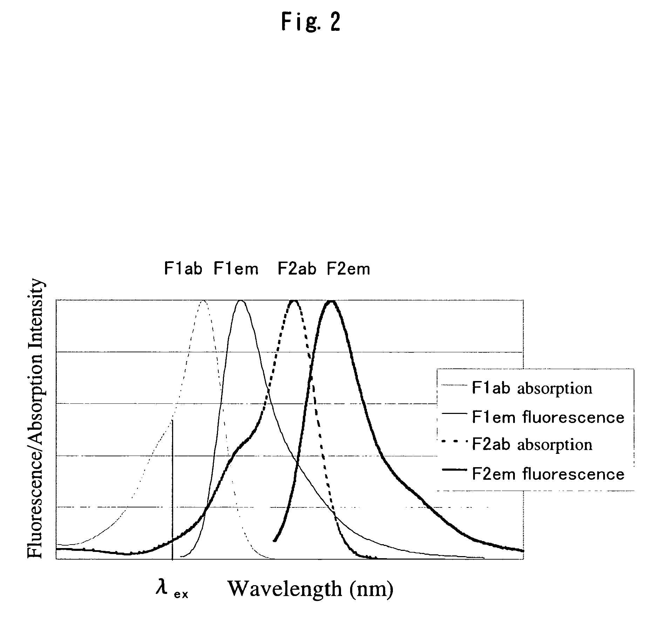

When a substance to be measured is labeled with fluorescent molecules and the fluorescence intensities thereof are measured, relations between wavelength and fluorescence intensity can be obtained as curves. First, the absorption bands (absorption spectra) of fluorescent molecules F1 and F2 are measured. The measurement results are obtained as the curves (Flab and F2ab) shown in Fig. 2. Here, it is desirable that the absorption bands (absorption spectra) of fluorescent molecules F1 and F2 should overlap with the wavelength of the light source to be used. However, even when the absorption bands exit in a region of longer wavelength than the wavelength of the light source, it is possible for F1 and F2 to emit fluorescence if part of the excitation light is absorbed by these fluorescent molecules (Fig. 2).

When a laser light source is used in actual measurement, a reagent containing F1 and F2 is excited with an excitation wavelength λex, and the intensity of the excitation light is adjusted with a neutral density filter (ND filter) as a wavelength filter on the excitation side 11 (Fig. 1). On the other hand, as a wavelength filter on the fluorescence side 12 (Fig. 1), a long pass filter is used so that no excitation light is detected. Alternatively, a band pass filter to select a specific wavelength region or a combination of long pass filter and short pass filter may of course be used instead (Fig. 1).

Hereinbelow, measurement of fluorescence decay curves of a substance to be measured in a test sample when fluorescence lifetimes τ1 and τ2 are different will be described.

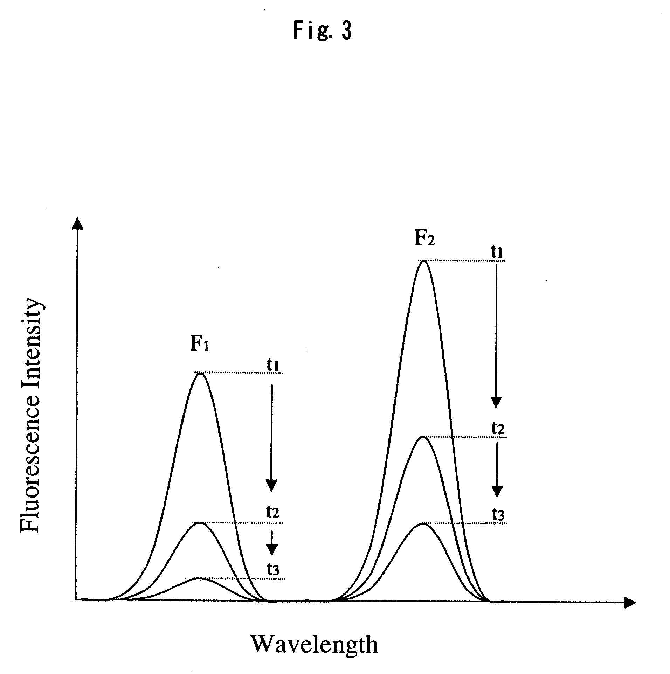

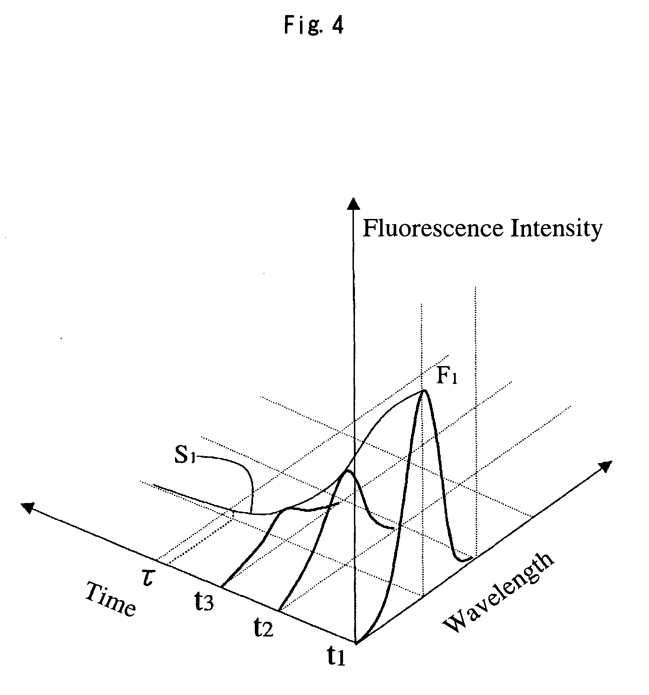

Let us suppose that fluorescence intensity curves are obtained as shown in the left side of Fig. 3 when the substance to be measured was labeled with fluorescent molecule F1 and that fluorescence intensity curves are obtained as shown in the right side of Fig. 3 when the substance to be measured was labeled with fluorescent molecule F2. Fluorescence intensities decay with the passage of time from t1 to t2 and from t2 to t3 (i.e., in a time-dependent manner) (Fig. 3) and finally reach fluorescence lifetime τ. In the present invention, the inventors have tried to obtain fluorescence decay curves by newly providing the time axis. Briefly, when the time axis is newly added to the coordinate shown in Fig. 3, it is possible to express individual fluorescence intensities at different time points continuously as a curve (Fig. 4). Connecting peak points of fluorescence intensity curves as fluorescence counts for the purpose of convenience yields curve S1 shown in Fig. 4 (curve S1 for F1 alone is shown in Fig. 4 in order to simplify explanation).

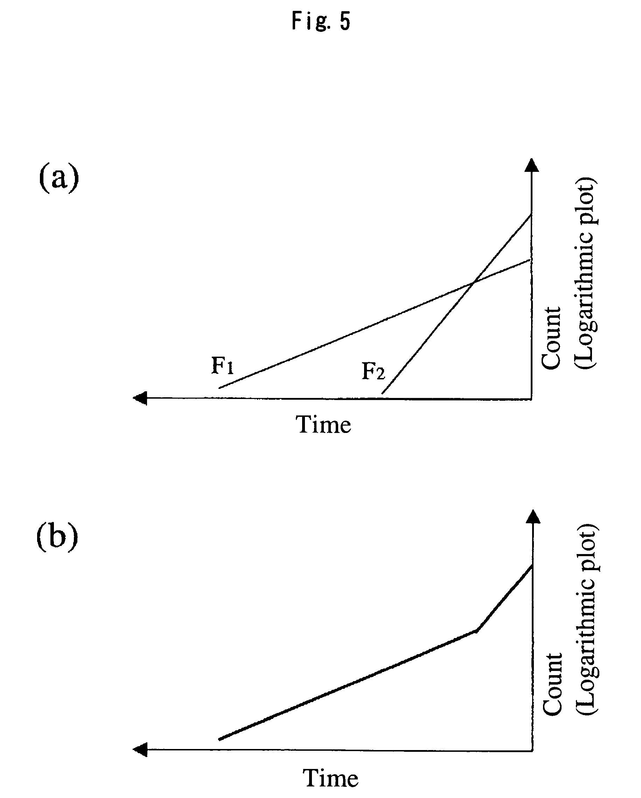

Curves S1 and S2 are obtained for F1 and F2, respectively. Logarithmic plotting of these curves yields the results shown in panel (a) in Fig. 5. These logarithmic plots are used as fluorescence decay curves. Panel (a) in Fig. 5 is a graph showing the fluorescence decay curves obtained by measuring a plurality of substances to be measured independently. When the plurality of substances to be measured were measured in one and same measuring system, a fluorescence decay curve as shown in panel (b) of Fig. 5 is obtained. Using the thus obtained fluorescence decay curve as an indicator, the concentration of a fluorescent molecule of interest (to what extent the molecule is present) can be measured. When a fluorescent molecule is bound to a substance to be measured to thereby label the substance fluorescently, the concentration of the substance to be measured is determined.

Generally, when fluorescence decay curves are measured using i species of fluorescent molecules having different inherent fluorescence lifetimes, a fluorescence lifetime function f(t) is represented by the following formula I:

$$f(t) = \sum_{i=1}^{k} A_i \exp(-t/\tau_i) \tag{I}$$

=A1exp(-t/τ1) + A2exp(-t/τ2) + A3exp(-t/τ3) + ..... + Akexp(-t/τk)
where Ai is coefficient; t is time; and τi is fluorescence lifetime.

If necessary, the above-described fluorescence lifetime function f(t) may be obtained by the following formula II in which background at the time of measurement is added:

$$f(t) = \sum_{i=1}^{k} A_i \exp(-t/\tau_i) + \text{background} \tag{II}$$

=A1exp(-t/τ1) + A2exp(-t/τ2) + A3exp(-t/τ3) + ..... + Akexp(-t/τk) + background
where Ai is coefficient; t is time; and τi is fluorescence lifetime.

The fluorescence lifetimes and intensities of the fluorescent molecules contained in a test sample can be obtained by deconvolution of the measured fluorescence decay curves. Deconvolution is known to those skilled in the art. As a result, values of coefficient A and fluorescence lifetime τ are obtained. Since the ratios of fluorescence intensities of individual fluorescent molecules are proportional to (Ai x τi) (where i=1, 2, 3, ...), the mixing ratio of individual fluorescent molecules can be estimated as (A1 x τ1) : (A2 x τ2) : (A3 × τ3) : ...... If one of the fluorescent molecules contained in the test sample is a reference fluorescent molecule, concentrations of other fluorescent molecules of unknown concentrations can be determined by comparing fluorescence intensities.

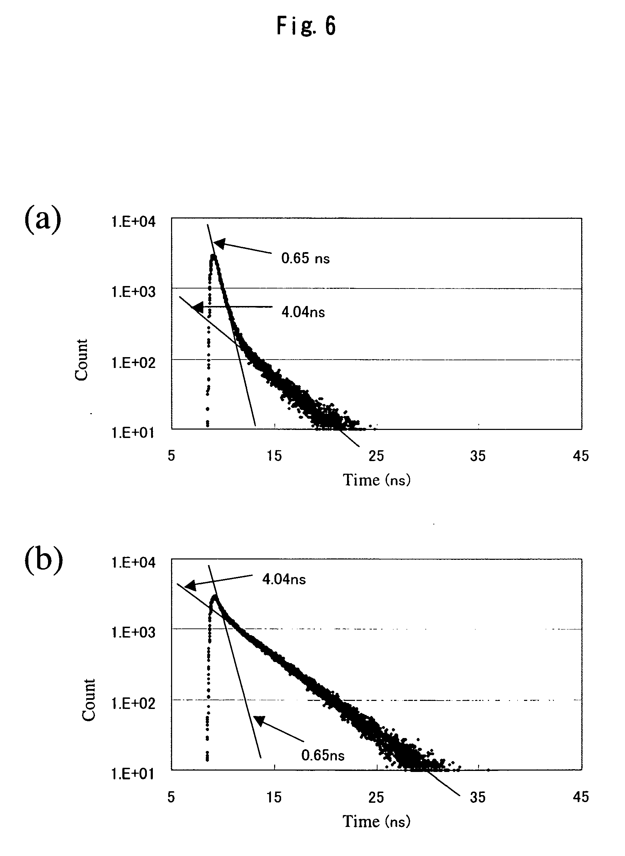

When two species of fluorescent molecules having different fluorescence lifetimes τ1 and τ2 are used as described above, the results of measurement of fluorescence decay curves will give data such as shown in Fig 6, as described later in Examples. Then, by deconvolution of the decay of fluorescence intensities which is convolution of g(t) (response function of the apparatus) and f(t) (essential fluorescence lifetime function which fluorescent molecules have), coefficient A and the fluorescence lifetimes of fluorescent molecules in the test sample are determined. From the resultant values of coefficient A and fluorescence lifetime $\tau$, the mixing ratio of the two fluorescent molecules is calculated by (Al x $\tau$1) : (A2 x $\tau$2). If one of the fluorescent molecules contained in the test sample is a reference fluorescent molecule, the concentration of the other fluorescent molecule of unknown concentration can be determined by comparing fluorescence intensities.

According to the present invention, a plurality of fluorescent molecules for labeling which could not be used in the same solution at the same time because their fluorescence spectra overlap greatly can be used regardless of their fluorescence spectra, as long as their fluorescence lifetimes differ from each other at least by a factor of 1.1 or more, preferably by a factor of 1.1-10, more preferably by a factor of 1.1-5, still more preferably by a factor of 3-5. This makes detection multiplex and enables high throughput measurement which has never been achieved so far. Specific difference in fluorescence lifetime may be, for example, by a factor of 1.10, 1.32, 1.45, 1.79, 1.92, 1.95, 2.14, 2.77, 2.83, 3.43, 5.31, 5.40, 5.92, 6.22, 7.83 or 9.49, but the difference is not limited to these factors. Therefore, it is possible to apply a combination of fluorescent molecules such as disclosed in the present invention to many applications where analyses have been performed by comparing fluorescence intensities, to thereby improve productivity. Specifically, use of a band pass filter as a wavelength filter on the fluorescence side makes it possible to utilize not only the time dependency but also the wavelength dependency of fluorescence intensities. As a result, the number of probes which can be labeled simultaneously for a substance to be detected can be increased sharply. This means that assays can be made highly efficient and cost can be reduced. The difference in fluorescence lifetime (lifetime ratio) between $\tau$1 and $\tau$2 is, as described above, by a factor of 1.1 or more, preferably by a factor of 1.1-10, more preferably by a factor of 1.1-5, still more preferably by a factor of 3-5. The difference may be by a factor of 5 or more, or even 10 or more. Further, 2 or more species, preferably 3 to 13 species of fluorescent molecules with such fluorescence lifetimes may be used simultaneously. However, it is preferable that the number of species of these fluorescent molecules used simultaneously is 4 to 9, still preferably 5 to 7, from the viewpoint of stable quantitative/qualitative analysis.

For example, a plurality of species of fluorescent molecules may be fluorescent molecules belonging to different three or more groups selected from the group consisting of a group having an inherent fluorescence lifetime of 0.01 ns or more and less than 1.0 ns; a group having an inherent fluorescence lifetime of 1.0 ns or more and less than 2.0 ns; a group having an inherent fluorescence lifetime of 2.0 ns or more and less than 3.0 ns; a group having an inherent fluorescence lifetime of 3.0 ns or more and less than 4.0 ns; a group having an inherent fluorescence lifetime of 4.0 ns or more and less than 5.0 ns; a group having an inherent fluorescence lifetime of 5.0 ns or more and less than 6.0 ns; and a group having an inherent fluorescence lifetime of 6.0 ns or more and less than 7.0 ns. Preferably, the fluorescence lifetime of the fluorescent molecule is 30 ns or less. Alternatively, 3 to 13 species, preferably 4 to 9 species, still more preferably 5 to 7 species of fluorescent molecules with fluorescence lifetimes different from each other by 1.0 ns or more may be used.

Specific examples of fluorescent molecules which may be used for measuring fluorescence lifetimes include the following dyes:

Cascade Yellow, Dapoxyl carboxylic acid, Pacific Blue, 7-Hydroxycourmarin-3-carboxylic acid, PyMPO, 5-carboxynaphthofluorescein, Dabcyl LysoSensor, Lucifer Yellow, Alexa Flour, NBD-X, DCCH, HEX, JOE, ROX, Texas Red, TET, TAMRA (Invitrogen; USA), Cy2, Cy3, Cy3B, Cy3.5, Cy5, Cy5.5, Cy7 (Amersham Bioscience), FITC.

These fluorescent molecules are used as a kit or reagent for measuring a substance(s) to be measured in the present invention. The kit may also contain buffers, a manual, parts or the like in addition to those fluorescent molecules.

In the above-described example, a method for measuring the concentration of a specific fluorescent molecule present in a solution containing a plurality of fluorescent molecules with different fluorescence lifetimes has been described. This measuring method of the present invention is applicable to identification of concentrations of labeled probes or targets (e.g., nucleic acids, proteins, peptides, ligands, receptors, donors, hormones, and sugar chains) or identification/detection of fluorescence-emitting trace substances. Further, the method is also applicable to judgment of the types of substances to be measured (e.g., genes).

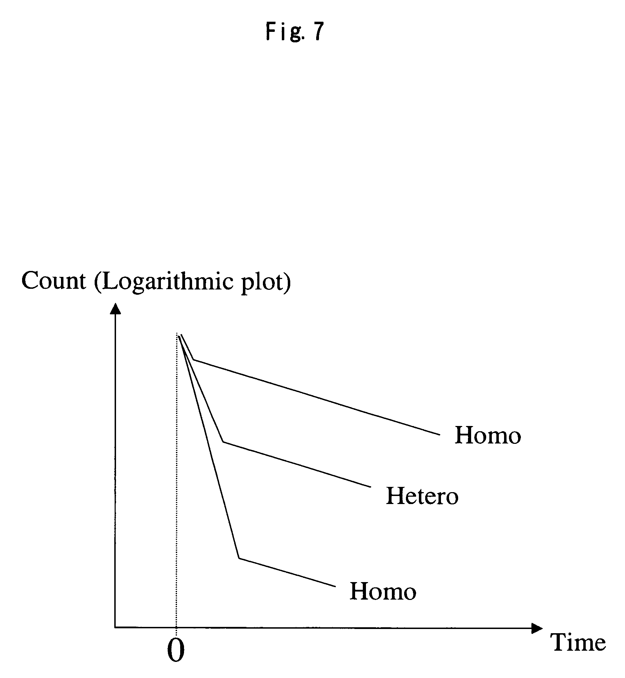

Specific examples of such applications include DNA microarray method, TaqMan PCR method and the invader method and the like. By replacing the fluorescent molecule used in these methods with a plurality of species of fluorescent molecules as shown in the present invention, it is possible to make these methods multiplex and thereby achieve high throughput analysis of substances to be measured (such as genes). Fig. 7 shows fluorescence decay curves of fluorescence lifetimes obtainable when the method of the present invention is applied to SNP typing.

In the above-described Fig. 6, fluorescent molecules are excited with a wavelength of 408 nm. Alternatively, the fluorescent molecules may be excited with a wavelength appropriate for the absorption spectra of the molecules used, e.g., 635 nm. Further, they may be excited with a plurality of wavelengths such as 408 nm and 635 nm. This enables simultaneous use of various fluorescent molecules having a wide range of absorption spectra, making detection still more multiplex.

In the above-described example, laser diode (LD) or laser is used as a light source. Other light sources such as flash lump or light emitting diode (LED) may also be used.

In the present invention, pulse frequency, pulse intensity and pulse diameter may be selected appropriately depending on the substance to be measured. For example, pulse frequency is from 1 kHz to 1 GHz; pulse intensity is from several $\mu$W to several hundred W; and pulse diameter is from several ten $\mu$m to several ten mm.

Further, the present invention provides a measuring apparatus comprising means for measuring fluorescence intensities of individual fluorescent molecules in a time-dependent manner and means for measuring the concentration of a substance to be measured by comparing the fluorescence intensities.

Hereinbelow, the present invention will be described more specifically with reference to the Examples. However, the present invention is not limited to these Examples.

EXAMPLE 1: Quantitative Determination of Fluorescent Molecules with Different Fluorescence Lifetimes

In this Example, fluorescence decay curves of a test sample containing 5-carboxynaphtofluoresceine (hereinafter expressed as "CNF") with a fluorescence lifetime of 0.65 ns ($\tau$1) (designated F1) and fluoresceine with a fluorescence lifetime of 4.04 ns ($\tau$2) (designated F2) were measured using the measuring principle shown in Fig. 1, followed by observation of the ratio of fluorescence intensities. CNF was used as a reference fluorescent molecule. The peak wavelengths of absorption spectrum and fluorescence spectrum of CNF were 591 nm and 649 nm, respectively. The peak wavelengths of absorption spectrum and fluorescence spectrum of fluoresceine were 494 nm and 519 nm, respectively.

Operations were as described below: Buffer (pH=7.6, 50 mM Tris-HCl, 1M NaCl, 30 mM KCl, 5 mM MgCl$_2$) solutions containing the two fluorescent molecules (CNF and fluoresceine) at ratios as indicated in Table 1 were prepared, followed by measurement of the fluorescence decay curves (Fig. 6). Briefly, the test sample was excited by an LD light source of a wavelength of 408 nm, and the fluorescence was measured using a long pass filter of 430 nm. The results as shown in Table 1 were obtained. In this Example, the inherent fluorescence lifetimes of CNF and fluoresceine were obtained in advance from solutions containing CNF alone and fluoresceine alone, respectively. Using the thus obtained fluorescence lifetimes, coefficient Bi (where i = 1, 2) of the fitting function was calculated.

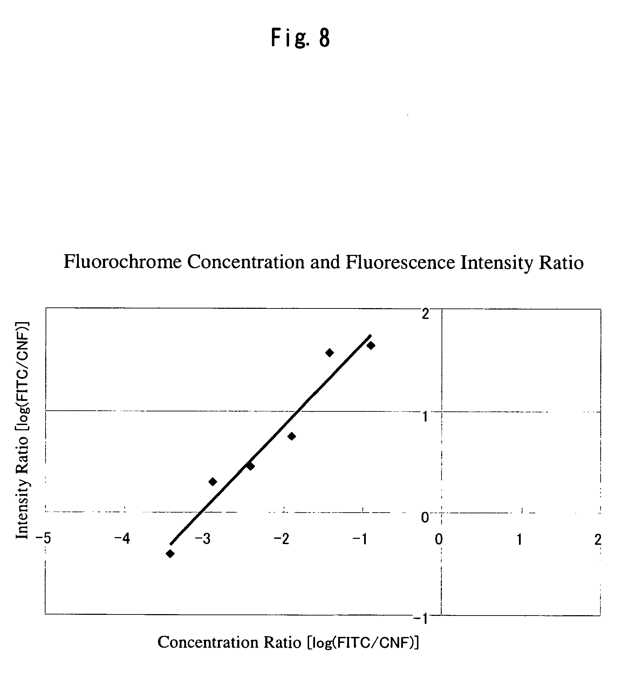

As is clear from these results, the fluorescence lifetime ratio between CNF and fluoresceine is more than 6 (i.e., 6.2 < 4.04/0.65 <6.3) and thus it is easy to separate the fluorescence lifetime components derived from CNF and fluoresceine. When the concentration of fluoresceine is changed against CNF, it is observed that the fluorescence intensity ratio ("log ($\tau$2B2/$\tau$1B1)" value in Table 1) obtained from fluorescence decay curves of fluorescence lifetimes shows linear changes in response to the above concentration change (Fig. 8). By using this result as a calibration curve, it is possible to measure fluorescence decay curves of a test sample containing fluoresceine of unknown concentration and to specify the concentration of fluoresceine in the sample solution by determining the concentration ratio to the reference fluorescent molecule. As is clear from Fig. 8, linearity can be retained even when the concentration of fluoresceine to be quantitatively determined changes by about three orders of magnitude. Even when the concentration of fluoresceine does not fall within the range from 0.0015 to 0.5 $\mu$M, it is possible to specify the concentration by changing the amount of CNF, the reference fluorescent molecule. Further, it is also possible to expand the detection range for fluoresceine concentration (dynamic range) by mixing in a test solution two or more species of fluorescent molecules with known concentrations.

EP 1 612 541 A1

Table 1.  Fluorescence Lifetimes and Mixing Ratio in FITC/CNF Mixed System

| ID | Measuring conditions | | | | Fitting results | | | | | | | |
|---|---|---|---|---|---|---|---|---|---|---|---|---|
| | CNF ($\mu$M) | FITC ($\mu$M) | FITC/CNF | log (FITC/CNF) | $\tau_1$ (ns) | $\tau_2$ (ns) | $B_1$ | $B_2$ | $\chi^2$ | $\tau_2 B_2 / \tau_1 B_1$ | log ($\tau_2 B_2 / \tau_1 B_1$) | Relevant Fig. |
| 1 | 4 | 0 | | | 0.65 | | | | 1.25 | | | |
| 2 | 4 | 0.0015 | 0.000375 | −3.426 | 0.65 | 4.04 | 0.941 | 0.059 | 1.13 | 0.390 | −0.409 | |
| 3 | 4 | 0.005 | 0.00125 | −2.903 | 0.65 | 4.04 | 0.756 | 0.244 | 1.24 | 2.006 | 0.302 | Fig. 6(a) |
| 4 | 4 | 0.015 | 0.00375 | −2.426 | 0.65 | 4.04 | 0.686 | 0.314 | 1.19 | 2.845 | 0.454 | |
| 5 | 4 | 0.05 | 0.0125 | −1.903 | 0.65 | 4.04 | 0.527 | 0.473 | 1.22 | 5.579 | 0.747 | |
| 6 | 4 | 0.15 | 0.0375 | −1.426 | 0.65 | 4.04 | 0.145 | 0.855 | 1.36 | 36.649 | 1.564 | Fig. 6(b) |
| 7 | 4 | 0.5 | 0.125 | −0.903 | 0.65 | 4.04 | 0.124 | 0.876 | 1.31 | 43.909 | 1.643 | |
| 8 | 0 | 0.05 | | | | 4.04 | | | 1.17 | | | |

※ Fitting results were obtained by fixing $\tau 1$ and $\tau 2$ and fitting with a two-exponential function

※ Fitting function:   A[B1 exp(-t/$\tau$1) + B2 exp(-t/$\tau$2)]     (B1 + B2= 1)

EXAMPLE 2: Method of SNP (single nucleotide polymorphism) Typing by Invader Method Using Fluorescent Molecules with Different Fluorescence Lifetimes

Experimental operations were as described below. First, 10 $\mu$l of human genomic DNA (40 ng/$\mu$l) was dispensed into 200 $\mu$l PCR tubes. The tube was left in air to evaporate the solvent. Then, approx. 20 $\mu$l of an invader method reagent containing FRET probe labeled with CNF and fluoresceine was dispensed thereinto. After tightly sealing the tube, the DNA was denatured at 95°C for 5 min and reacted in a thermostat bath at 63°C for 4 hrs. After the completion of the reaction, the test sample was excited by an LD light source of a wavelength of 408 nm. Using a long pass filter of 430 nm, decay curves of the emitted fluorescence were measured by the principle for measuring fluorescence lifetimes shown in Fig. 1. Then, frequency of SNP was analyzed (typed). The results revealed that the value of (concentration of CNF)/(concentration of fluoresceine) converted from (fluorescence intensity of CNF)/(fluorescence intensity of fluoresceine) obtained from fluorescence decay curves is 6-120 or 0.01-0.15 for the sample containing a homozygote, and that the corresponding value for the sample containing a heterozygote is 0.2-4. As is clear from these results, it is possible to discriminate between homozygotes and heterozygotes by labeling the FRET probe for an SNP to be typed with fluorescent molecules having different fluorescence lifetimes.

EXAMPLE 3: Method of SNP Typing by TaqMan PCR Method Using Fluorescent Molecules with Different Fluorescence Lifetimes

Experimental operations were as described below. First, 10 $\mu$l of genomic DNA (40 ng/$\mu$l) was dispensed into 200 $\mu$l PCR tubes. The tube was left in air to evaporate the solvent. Then, approx. 20 $\mu$l of a TaqMan PCR method reagent labeled with CNF and fluoresceine was dispensed thereinto. Subsequently, the DNA was denatured at 95°C for 10 min and subjected to 40 cycles of incubation (1 cycle consisting of 95°C, 1 min and 60°C, 3 min). The resultant test sample was excited by an LD light source of a wavelength of 408 nm. Using a long pass filter of 430 nm, decay curves of the emitted fluorescence were measured by the principle for measuring fluorescence lifetimes shown in Fig. 1. Then, frequency of SNP was analyzed (typed). The results revealed that the value of (concentration of CNF)/(concentration of fluoresceine) converted from (fluorescence intensity of CNF)/(fluorescence intensity of fluoresceine) obtained from fluorescence decay curves is 5-95 or 0.015-0.2 for the sample containing a homozygote, and that the corresponding value for the sample containing a heterozygote is 0.23-4.2. As is clear from these results, it is possible to discriminate between homozygotes and heterozygotes by labeling the probe for an SNP to be typed with fluorescent molecules having different fluorescence lifetimes.

EXAMPLE 4: Quantitative Determination of a Plurality of Fluorescent Molecules with Different Fluorescence Lifetimes

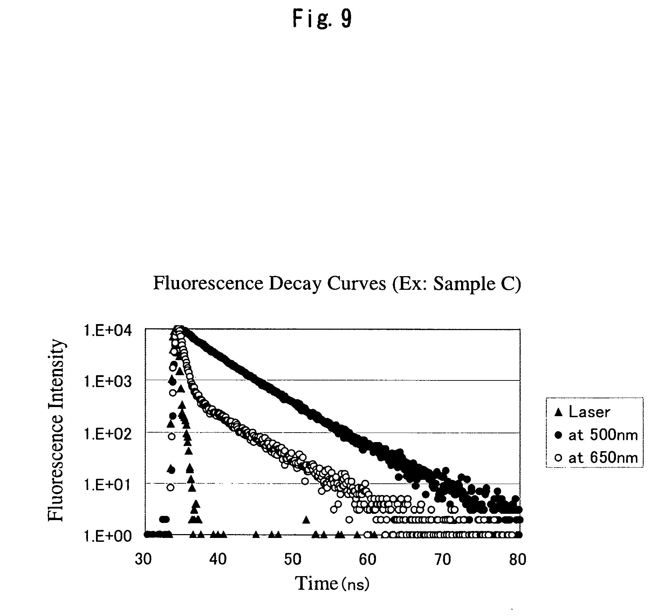

Experimental operations were as described below. Buffer (pH=7.6, 50 mM Tris-HCl, 1M NaCl, 30 mM KCl, 5 mM MgCl$_2$) solutions A, B and C containing Pacific Blue, Lucifer Yellow, PyMPO and CNF at the ratios indicated in Table 2, respectively, were prepared, followed by measurement of fluorescence decay curves of these solutions. The inherent fluorescence lifetimes of Pacific Blue, Lucifer Yellow, PyMPO and CNF were measured individually from solutions each containing Pacific Blue, Lucifer Yellow, PyMPO or CNF alone. The results revealed that their inherent fluorescence lifetimes are 3.45 ns, 6.17 ns, 1.80 ns and 0.65 ns, respectively. The peak wavelengths of absorption spectra of Pacific Blue, Lucifer Yellow, PyMPO and CNF are 410 nm, 425 nm, 400 nm and 590 nm, respectively; and the peak wavelengths of fluorescence spectra of them are 452 nm, 525 nm, 560 nm and 650 nm, respectively.
By way of example, the fluorescence decay curves of sample C in Table 2 measured at two different wavelengths (500 nm and 650 nm) using a spectroscope are shown in Fig. 9. The band width of the spectroscope was 8 nm.

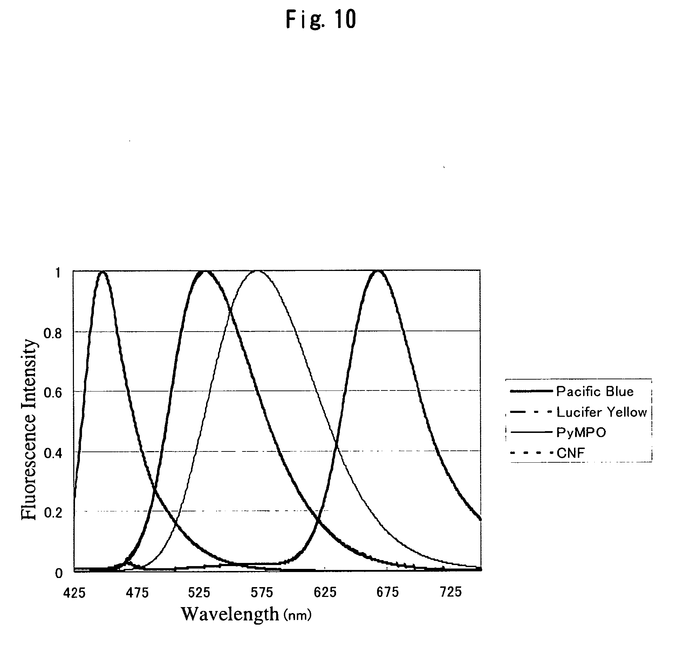

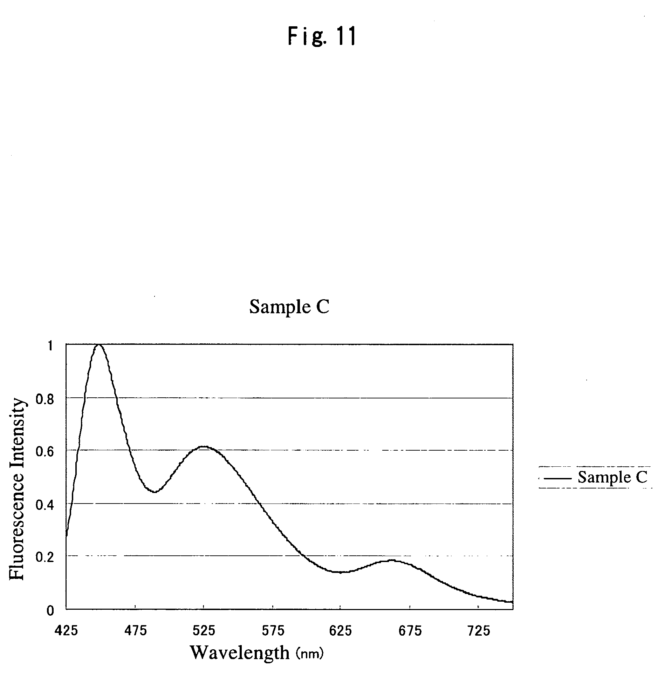

Fig. 10 shows the normalized fluorescence spectra of Pacific Blue, Lucifer Yellow, PyMPO and CNF when each of them was excited alone by light with a wavelength of 408 nm. Fig. 11 shows the fluorescence spectrum of sample C when excited by light with a wavelength of 408 nm. As seen from Fig. 11, when four species of fluorescent molecules are mixed, separation or quantitative determination with a fluorescence spectrum becomes very difficult.
On the other hand, as is clear from Table 2, the concentration ratio of the four species of fluorescent molecules and the concentration ratio obtained from measurement of fluorescence lifetimes are proportional. Therefore, even when a solution contains four species of fluorescent molecules, it is possible to determine the concentration ratio accurately by analyzing decay curves if fluorescence lifetimes of the molecules differ from each other by 1.0 ns or more (or by a factor of 1.1 or more).

Table. 2

| Measuring conditions | | | | | Fitting results ※ | | |
| --- | --- | --- | --- | --- | --- | --- | --- |
| Sample | Pacific Blue (μM) | Lucifer Yellow (μM) | PyMPO (μM) | CNF (μM) | $\tau_1B_1{:}\tau_2B_2$ *1 (at 500nm) | $\tau_2B_2{:}\tau_3B_3{:}\tau_4B_4$ *2 (at 650nm) | $\tau_1B_1 : \tau_2B_2 : \tau_3B_3 : \tau_4B_4$ |
| | 1 | 2 | 3 | 4 | | | Pacific Blue : Lucifer Yellow : PyMPO : CNF |
| A | 0.5 | 0.5 | 0.2 | 2.5 | 71:29 | 17:26:57 | 2.4 : 1.0 : 1.5 : 3.4 |
| B | 0.5 | 0.5 | 0.2 | 0.5 | 75:25 | 31:42:27 | 3.0 : 1.0 : 1.4 : 0.9 |
| C | 0.1 | 0.5 | 0.05 | 2.5 | 36:64 | 19:7:74 | 0.6 : 1.0 : 0.4 : 3.9 |

*1    The spectroscope for measuring fluorescence was set at 500 nm, and fitting was carried out with the two components of Pacific Blue and Lucifer Yellow.

*2    The spectroscope for measuring fluorescence was set at 650 nm, and fitting was carried out with the three components of Lucifer Yellow, PyMPO and CNF.

※    Fitting function:    $B_1\exp(-t/\tau 1) + B_2\exp(-t/\tau 2) + ..... + background$

※    As a result of measurement, the inherent fluorescence lifetimes of Pacific Blue, Lucifer Yellow, PyMPO and CNF were found to be 3.45 ns ($\tau 1$), 6.17 ns ($\tau 2$), 1.80 ns ($\tau 3$) and 0.65 ns ($\tau 4$), respectively.

EP 1 612 541 A1

EXAMPLE 5: Quantitative Determination of a Plurality of Fluorescent Molecules with Different Fluorescence Lifetimes and Application Thereof to SNP Typing

Experimental operations were as described below. Buffer (pH=7.6, 50 mM Tris-HCl, 1M NaCl, 30 mM KCl, 5 mM MgCl$_2$) solutions D, E and F containing Alexa Fluor 405, Marina Blue, PyMPO, Alexa Fluor 594 and CNF at the ratios indicated in Table 3, respectively, were prepared, followed by measurement of fluorescence decay curves of these solutions. The inherent fluorescence lifetimes of Alexa Fluor 405, Marina Blue, PyMPO, Alexa Fluor 594 and CNF were measured individually from solutions each containing Alexa Fluor 405, Marina Blue, PyMPO, Alexa Fluor 594 or CNF alone. The results revealed that their inherent fluorescence lifetimes are 3.51 ns, 5.09 ns, 1.80 ns, 3.85 ns and 0.65 ns, respectively. The peak wavelengths of absorption spectra of Alexa Fluor 405, Marina Blue, PyMPO, Alexa Fluor 594 and CNF are 405 nm, 360 nm, 400 nm, 590 nm and 590 nm, respectively; and the peak wavelengths of fluorescence spectra of them are 425 nm, 455 nm, 560 nm, 620 nm and 650 nm, respectively.

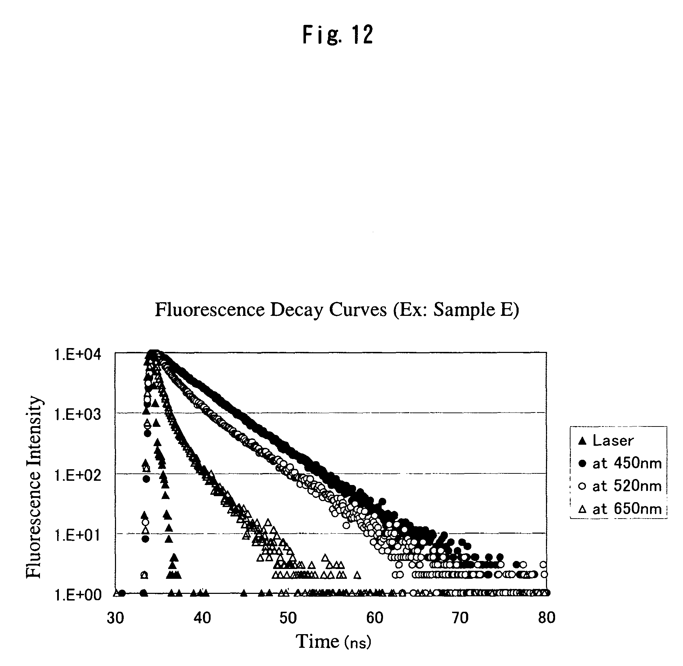

By way of example, the fluorescence decay curves of sample E in Table 3 measured at three different wavelengths (450 nm, 520 nm and 650 nm) using a spectroscope are shown in Fig. 12. The band width of the spectroscope was 8 nm.

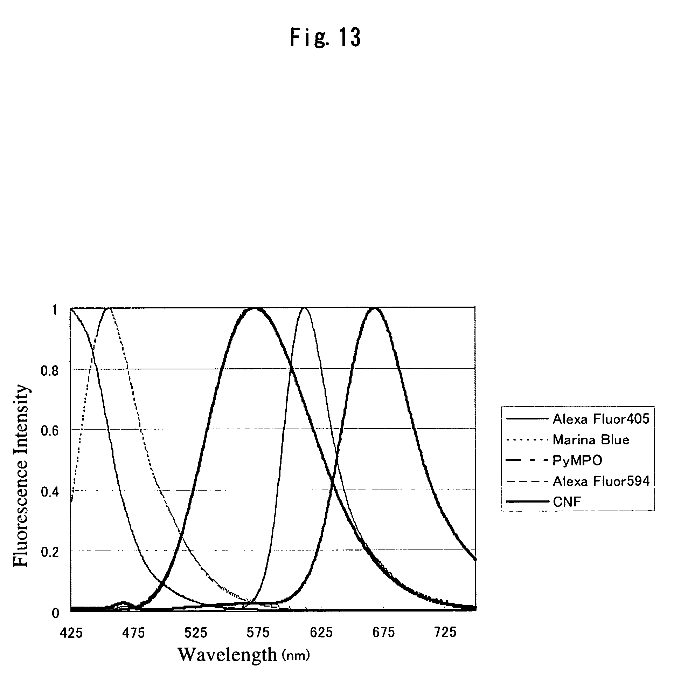

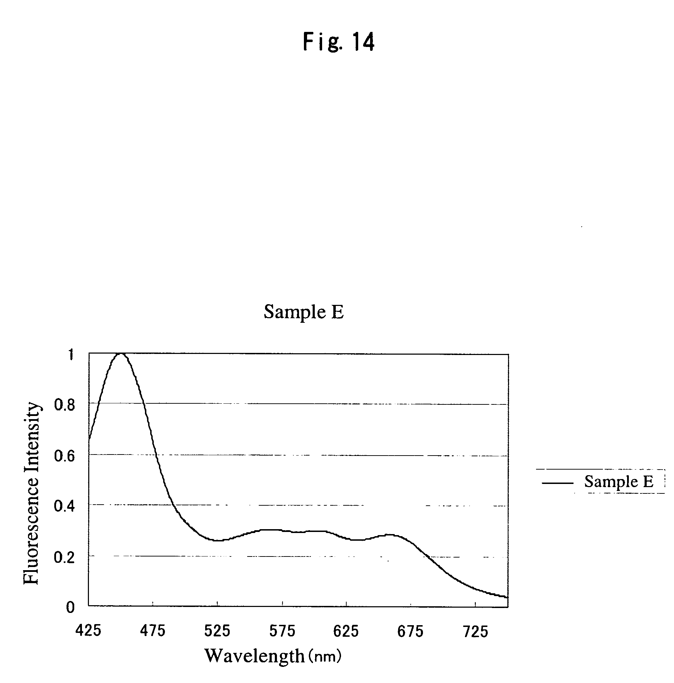

Fig. 13 shows the normalized fluorescence spectra of Alexa Fluor 405, Marina Blue, PyMPO, Alexa Fluor 594 and CNF when each of them was excited alone by light with a wavelength of 408 nm. Fig. 14 shows the fluorescence spectrum of sample E when excited by light with a wavelength of 408 nm. As seen from Fig. 14, when five species of fluorescent molecules are mixed, separation or quantitative determination with a fluorescence spectrum becomes very difficult.

On the other hand, as is clear from Table 3, the concentration ratio of the five species of fluorescent molecules and the concentration ratio obtained from measurement of fluorescence lifetimes are proportional. Therefore, even when a solution contains five species of fluorescent molecules, it is possible to determine the concentration ratio accurately by analyzing decay curves if fluorescence lifetimes of the molecules differ from each other by 1.0 ns or more (or by a factor of 1.1 or more).

The example described above may be applicable to typing of SNPs at, for example, two sites. For example, Alexa Fluor 405 and Marina Blue may be used so as to correspond to one SNP site; Alexa Fluor 594 and CNF may be used so as to correspond to the other SNP site; and PyMPO may be used as a reference fluorescent molecule of a known concentration. By these procedures, it becomes possible to discriminate the types (homo or hetero) at one SNP site from the fluorescence intensity ratio between Alexa Fluor 405 and Marina Blue. Likewise, it becomes possible to discriminate the types at the other SNP site from the fluorescence intensity ratio between Alexa Fluor 594 and CNF. By using a plurality of fluorescent molecules with different fluorescence lifetimes in this manner, it is possible to make SNP typing multiplex and to thereby reduce costs and measuring time greatly.

Table 3.

| Sample | Measuring conditions | | | | | Fitting results$^※$ | | | |
| | Alexa Fluor405 (μM) | Marina Blue (μM) | PyMPO (μM) | Alexa Fluor594 (μM) | CNF (μM) | $\tau_1B_1{:}\tau_2B_2$ [*1] (at 450nm) | $\tau_2B_2{:}\tau_3B_3$ [*2] (at 520nm) | $\tau_3B_3{:}\tau_4B_4{:}\tau_5B_5$ [*3] (at 650nm) | $\tau_1B_1{:}\tau_2B_2{:}\tau_3B_3{:}\tau_4B_4{:}\tau_5B_5$ Alexa Fluor405:Marina Blue: PyMPO:Alexa Fluor594:CNF |
| | 1 | 2 | 3 | 4 | 5 | | | | |
|---|---|---|---|---|---|---|---|---|---|
| D | 0.04 | 0.4 | 0.15 | 0.15 | 0.4 | 71:29 | 41:39 | 20:28:52 | 2.7 : 1.1 : 1.0 : 1.4 : 2.6 |
| E | 0.008 | 0.4 | 0.15 | 0.03 | 0.4 | 28:72 | 53:47 | 25:8:67 | 0.4 : 1.1 : 1.0 : 0.3 : 2.6 |
| F | 0.04 | 0.08 | 0.15 | 0.15 | 0.08 | 93:7 | 12:56 | 36:44:20 | 2.9 : 0.2 : 1.0 : 1.2 : 0.6 |

*1 The spectroscope for measuring fluorescence was set at 450 nm, and fitting was carried out with the two components of Alexa Fluor 405 and Marina Blue.

*2 The spectroscope for measuring fluorescence was set at 520 nm, and fitting was carried out with the three components of Alexa Fluor 405, Marina Blue and PyMPO.

Here, ratios between Marina Blue and PyMPO are shown.

*3 The spectroscope for measuring fluorescence was set at 520 nm, and fitting was carried out with the three components of PyMPO, Alexa Fluor 594 and CNF.

※ Fitting function: $B_1\exp(-t/\tau_1) + B_2\exp(-t/\tau_2) + \ldots + \text{background}$

※ As a result of measurement, the inherent fluorescence lifetimes of Alexa Fluor 405, Marina Blue, PyMPO, Alexa Fluor 594 and CNF were found to be 3.51 ns ($\tau_1$), 5.09 ns ($\tau_2$), 1.80 ns ($\tau_3$), 3.85 ns ($\tau_4$) and 0.65 ns ($\tau_5$), respectively.

INDUSTRIAL APPLICABILITY

According to the present invention, there are provided a method, reagent and apparatus for quantitatively determining a fluorescent molecule, as well as a method for analyzing the same. According to the present invention, it is possible to detect a substance of low concentration in a test sample with high sensitivity by labeling probes or the target substance with a plurality of species of fluorescent molecules having different fluorescence lifetimes. Thus, the present invention is useful as a reagent for detecting or quantitatively determining a substance to be measured.

**Claims**

1.  A method of detecting a fluorescent molecule in a test sample, comprising the following steps:

    (a) a step of measuring in a time-dependent manner individual fluorescence intensities of a plurality of species of fluorescent molecules each having an inherent fluorescence lifetime; and
    (b) a step of comparing the measured fluorescence intensities.

2.  A method of detecting a substance to be measured in a test sample, comprising the following steps:

    (a) a step of labeling the substance to be measured with a plurality of species of fluorescent molecules each having an inherent fluorescence lifetime;
    (b) a step of measuring in a time-dependent manner individual fluorescence intensities of the fluorescent molecules labeling the substance; and
    (c) a step of comparing the measured fluorescence intensities.

3.  A method of judging the type of a substance to be measured in a test sample, comprising the following steps:

    (a) a step of labeling the substance to be measured with a plurality of species of fluorescent molecules each having an inherent fluorescence lifetime;
    (b) a step of measuring in a time-dependent manner individual fluorescence intensities of the fluorescent molecules labeling the substance;
    (c) a step of comparing the measured fluorescence intensities; and
    (d) a step of judging the types of the substances to be measured using the intensity ratios obtained by the comparison.

4.  The method according to any one of claims 1 to 3, wherein the plurality of species of fluorescent molecules comprise fluorescent molecules belonging to individual groups of different three or more groups selected from the group consisting of a group having an inherent fluorescence lifetime of 0.01 ns or more and less than 1.0 ns; a group having an inherent fluorescence lifetime of 1.0 ns or more and less than 2.0 ns; a group having an inherent fluorescence lifetime of 2.0 ns or more and less than 3.0 ns; a group having an inherent fluorescence lifetime of 3.0 ns or more and less than 4.0 ns; a group having an inherent fluorescence lifetime of 4.0 ns or more and less than 5.0 ns; a group having an inherent fluorescence lifetime of 5.0 ns or more and less than 6.0 ns; and a group having an inherent fluorescence lifetime of 6.0 ns or more and less than 7.0 ns.

5.  The method according to any one of claims 1 to 3, wherein the plurality of species of fluorescent molecules comprise three or more fluorescent molecules which are different from each other by 1.0 ns or more in fluorescence lifetime.

6.  The method according to any one of claims 1 to 3, wherein the plurality of species of fluorescent molecules comprise three or more fluorescent molecules which are different from each other by a factor of 1.1 or more in fluorescence lifetime.

7.  The method according to any one of claims 1 to 3, wherein the fluorescence lifetime is 30 ns or less.

8.  The method according to claim 1, wherein at least one of the fluorescent molecules has a known concentration.

9.  The method according to any one of claim 2 to 7, wherein at least one of the substances to be measured has a known concentration.

**10.** The method according to any one of claims 2 to 9, wherein the substance to be measured is a probe or target.

**11.** The method according to claim 10, wherein the probe or target is nucleic acid.

**12.** A method of analyzing a fluorescent molecule in a test sample, comprising the following steps:

(a) a step of measuring in a time-dependent manner individual fluorescence intensities of a plurality of species of fluorescent molecules each having an inherent fluorescence lifetime and preparing a fluorescence lifetime function represented by the following formula I:

$$f(t) = \sum_{i=1}^{k} A_i \exp(-t / \tau_i) \qquad \text{(I)}$$

where $A_i$ is a coefficient; t is time; and $\tau_i$ is fluorescence lifetime; and
(b) a step of calculating fluorescence intensities using said function.

**13.** A method of analyzing a substance to be measured, comprising the following steps:

(a) a step of labeling the substance to be measured with a plurality of species of fluorescent molecules each having an inherent fluorescence lifetime;
(b) a step of measuring in a time-dependent manner fluorescence intensities of the fluorescent molecules labeling the substance and preparing a fluorescence lifetime function represented by the following formula I:

$$f(t) = \sum_{i=1}^{k} A_i \exp(-t / \tau_i) \qquad \text{(I)}$$

where $A_i$ is a coefficient; t is time; and $\tau_i$ is fluorescence lifetime;
and
(c) a step of calculating fluorescence intensities using said function.

**14.** The method according to claim 12 or 13, wherein the calculation of fluorescence intensities is calculation of the product of coefficient $A_i$ and fluorescence lifetime $\tau_i$.

**15.** A method of judging the type of a gene, comprising the following steps:

(a) a step of labeling the gene in a test sample with a plurality of species of fluorescent molecules each having an inherent fluorescence lifetime;
(b) a step of measuring in a time-dependent manner fluorescence intensities of the fluorescent molecules labeling the substance and preparing a fluorescence lifetime function represented by the following formula I:

$$f(t) = \sum_{i=1}^{k} A_i \exp(-t / \tau_i) \qquad \text{(I)}$$

where $A_i$ is a coefficient; t is time; and $\tau_i$ is fluorescence lifetime;

(c) a step of calculating fluorescence intensities using said function to thereby detect the fluorescence intensities of said fluorescent molecules; and
(d) a step of judging the type of the gene using said fluorescence intensities as indicators.

**16.** The method according to claim 15, wherein the calculation of fluorescence intensities is calculation of the product of coefficient Ai and fluorescence lifetime $\tau i$.

**17.** The method according to any one of claims 1 to 16, wherein the fluorescence lifetime of at least one of the fluorescent molecules is known.

**18.** A reagent or kit for detecting a substance to be measured, comprising a plurality of species of fluorescent molecules each having an inherent fluorescence lifetime.

**19.** An apparatus for detecting a fluorescent molecule in a test sample, comprising the following means:

(a) means for measuring in a time-dependent manner individual fluorescence intensities of a plurality of species of fluorescent molecules each having an inherent fluorescence lifetime; and
(b) means for comparing the measured fluorescence intensities.

**20.** An apparatus for quantitatively determining a substance to be measured in a test sample, comprising the following means:

(a) means for labeling the substance to be measured with a plurality of species of fluorescent molecules each having an inherent fluorescence lifetime;
(b) means for measuring in a time-dependent manner individual fluorescence intensities of the fluorescent molecules labeling the substance; and
(c) means for comparing the measured fluorescence intensities.

# Fig. 1

11    Wavelength filter on the excitation side

12    Wavelength filter on the fluorescence side

2   Pulsed light source

3

Test Sample 1

4

$h\nu$

5   PMT

6   Amp

7   CFD

8   TAC

Start    Stop

9   MCA

10   PC

# Fig. 2

Fig. 3

# Fig. 4

Fig. 5

(a)

(b)

# Fig. 6

# Fig. 7

Count (Logarithmic plot)

Homo

Hetero

Homo

0        Time

Fig. 8

Fluorochrome Concentration and Fluorescence Intensity Ratio

# Fig. 9

Fluorescence Decay Curves (Ex: Sample C)

# Fig. 10

# Fig. 11

Sample C

# Fig. 12

Fluorescence Decay Curves (Ex: Sample E)

# Fig. 13

# Fig. 14

Sample E

## INTERNATIONAL SEARCH REPORT

| International application No. |
|---|
| PCT/JP2004/004630 |

**A. CLASSIFICATION OF SUBJECT MATTER**
    Int.Cl⁷  G01N21/64

According to International Patent Classification (IPC) or to both national classification and IPC

**B. FIELDS SEARCHED**

Minimum documentation searched (classification system followed by classification symbols)
    Int.Cl⁷  G01N21/62-21/74, C21M1/00, C12Q1/68

Documentation searched other than minimum documentation to the extent that such documents are included in the fields searched
    Jitsuyo Shinan Koho        1922-1996   Toroku Jitsuyo Shinan Koho   1994-2004
    Kokai Jitsuyo Shinan Koho  1971-2004   Jitsuyo Shinan Toroku Koho   1996-2004

Electronic data base consulted during the international search (name of data base and, where practicable, search terms used)
    JICST FILE (JOIS)

**C. DOCUMENTS CONSIDERED TO BE RELEVANT**

| Category* | Citation of document, with indication, where appropriate, of the relevant passages | Relevant to claim No. |
|---|---|---|
| X | JP 5-126739 A   (Hamamatsu Photonics Kabushiki Kaisha), 21 May, 1993 (21.05.93), Full text; Fig. 1 & EP 556509 A        & US 5322796 A1 | 1,4-7,10,11, 19 |
| X | JP 6-148076 A  (Hamamatsu Photonics Kabushiki Kaisha), 27 May, 1994 (27.05.94), Par. Nos. [0079] to [0101]; Fig. 12 (Family: none) | 1,4-7,10,11, 19 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 07 May, 2004 (07.05.04) | 25 May, 2004 (25.05.04) |

| Name and mailing address of the ISA/ | Authorized officer |
|---|---|
| Japanese Patent Office | |
| Facsimile No. | Telephone No. |

Form PCT/ISA/210 (second sheet) (January 2004)

**INTERNATIONAL SEARCH REPORT**

International application No.

PCT/JP2004/004630

C (Continuation). DOCUMENTS CONSIDERED TO BE RELEVANT

| Category* | Citation of document, with indication, where appropriate, of the relevant passages | Relevant to claim No. |
|---|---|---|
| X | JP 2001-509612 A (Ruprecht-Karls-Universität Heidelberg), 24 July, 2001 (24.07.01), Par. Nos. [0002] to [0005] & DE 19830596 A  & WO 99/02974 A1 & EP 996854 A  & EP 1008845 A | 1-2,4-7,10, 11,18-20 |

Form PCT/ISA/210 (continuation of second sheet) (January 2004)